(19) **Europäisches Patentamt / European Patent Office / Office européen des brevets**

(11) **EP 4 585 974 A1**

(12) **EUROPEAN PATENT APPLICATION**
published in accordance with Art. 153(4) EPC

(43) Date of publication:
**16.07.2025 Bulletin 2025/29**

(51) International Patent Classification (IPC):
**G01V 1/28** (2006.01)   **G01V 1/30** (2006.01)

(21) Application number: **23862528.9**

(52) Cooperative Patent Classification (CPC):
**G01V 1/28; G01V 1/30; G01V 1/36; G06F 17/16**

(22) Date of filing: **08.09.2023**

(86) International application number:
**PCT/CN2023/117802**

(87) International publication number:
**WO 2024/051834 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.09.2022 CN 202211105068**

(71) Applicants:
• **China Petroleum & Chemical Corporation**
**Beijing 100728 (CN)**
• **Sinopec Geophysical Research Institute Co., Ltd.**
**Nanjing, Jiangsu 211103 (CN)**

(72) Inventors:
• **HE, Weiguang**
**Nanjing, Jiangsu 211103 (CN)**
• **HU, Guanghui**
**Nanjing, Jiangsu 211103 (CN)**

(74) Representative: **Hoffmann Eitle**
**Patent- und Rechtsanwälte PartmbB**
**Arabellastraße 30**
**81925 München (DE)**

(54) **FULL-WAVEFORM INVERSION METHOD AND DEVICE, AND STORAGE MEDIUM**

(57) The present disclosure provides a full-waveform inversion method and device, and a storage medium. The method comprises: constructing a cost matrix according to observed seismic data and synthetic seismic data, each matrix element in the cost matrix being used for representing the similarity between a piece of seismic trace data in the synthetic seismic data and a piece of seismic trace data in the observed seismic data; according to the cost matrix, determining a matching matrix used for reflecting the best matching relationship between the observed seismic data and the synthetic seismic data, and calculating a target function; obtaining an adjoint field hypocenter according to the target function; determining the gradient according to the adjoint field hypocenter and a forward propagation wave field; and iteratively updating an initial velocity model according to the gradient and an iteration step size until preset convergence criteria are met.

Acquire observed seismic data, and establish an initial velocity model according to the observed seismic data — S101

Determine synthetic seismic data and a forward propagation wave field according to the initial velocity model — S102

Construct a cost matrix according to the observed seismic data and the synthetic seismic data — S103

According to the cost matrix, determine a matching matrix used for reflecting the best matching relationship between the observed seismic data and the synthetic seismic data and calculate a target function — S104

Calculate a first-order partial derivative of the target function relating to the synthetic seismic data, to obtain an adjoint field hypocenter — S105

Determine the gradient according to the adjoint field hypocenter and the forward propagation wave field — S106

Iteratively update the initial velocity model according to the gradient and an iteration step size until preset convergence criteria are met, and output a final velocity model — S107

Fig. 1

## Description

### Cross-reference to Related Applications

The disclosure claims the priority of Chinese patent application No. 202211105068.7, entitled "Method and Device for Full-waveform Inversion and Storage Medium Thereof" and filed on September 9, 2022, the entirety of which is incorporated herein by reference.

### Technical Field

Embodiments of the disclosure relate to the technical field of oil and gas exploration, and in particular, to a method for full-waveform inversion, a device for full-waveform inversion, and a storage medium thereof.

### Background

Industrial exploration technology is becoming increasingly sophisticated, and a comprehensive process has been established from acquisition of seismic data to final identification of oil and gas reservoir stratum positions: first, seismic data is acquired, and data preprocessing is performed on the acquired seismic data after the seismic data acquisition is completed to remove noise and mark a first arrival wave; subsequently, an initial velocity model is established, and a high-precision and high-fidelity subsurface medium velocity model is reconstructed from the initial velocity model by using a full-waveform inversion method; and finally, seismic imaging and geological interpretation are performed based on the reconstructed subsurface medium velocity model. In a sense, exploring a subsurface medium can be seen as probing the velocity in strata, and velocity modeling playing a crucial and decisive role in high-precision imaging of the subsurface medium. The full-waveform inversion method is one of the most precise velocity modeling technologies currently available, and directly determines whether the position and dimension of the oil and gas reservoir can be successfully identified and determined finally.

So-called full-waveform inversion is dependent on a comparison between a waveform of synthetic seismic data and a waveform of actual seismic data. Currently, the widely adopted data comparison criterion in the full-waveform inversion is the least squares error function, the algorithm of which is limited to a comparison between identical sets of traces. In practice, it has been proven that the use of this least squares error function requires relatively stringent prerequisite conditions, namely, the initial velocity model is required to have a relatively high precision. If the precision of the initial velocity model is not high, which leads to a relatively large error between the synthetic seismic data and the actual seismic data, the least squares error function is prone to cause the full-waveform inversion to be trapped in a local minimum value. As a result, the final obtained subsurface medium velocity model differs greatly from the actual model, so that the inversion result significantly deviates from the actual circumstances and effects are unsatisfactory.

## Summary

Embodiments of the disclosure provide a method for full-waveform inversion, a device for full-waveform inversion, and a storage medium thereof to solve the problem that an existing full-waveform inversion method based on the least squares error function is prone to trapping in a local minimum value, which in turn causes unsatisfactory inversion effects.

According to a first aspect, an embodiment of the disclosure may provide a method for full-waveform inversion, which includes steps of:

   i) acquiring observed seismic data, and establishing an initial velocity model based on the observed seismic data;
   ii) determining synthetic seismic data and a forward propagation wave field according to the initial velocity model;
   iii) constructing a cost matrix based on the observed seismic data and the synthetic seismic data, where each of elements in the cost matrix represents a similarity between a piece of data of a seismic trace in the synthetic seismic data and a piece of data of a seismic trace in the observed seismic data;
   iv) determining a matching matrix for reflecting an optimum matching relationship between the observed seismic data and the synthetic seismic data according to the cost matrix, and calculating an objective function;
   v) calculating a first-order partial derivative of the objective function relating to the synthetic seismic data, to obtain an adjoint source;
   vi) determining a gradient based on the adjoint source and the forward propagation wave field;
   vii) updating the initial velocity model based on the gradient and an iteration step; and
   viii) repeating steps ii) to vii) seven until preset convergence criteria are met, and the updated velocity model is output as a final velocity model of the full-waveform inversion.

In an embodiment, the data of the seismic trace may be extracted along a time axis, along a spatial axis, or along one of conjugate curves.

In an embodiment, an element in the cost matrix may be determined by the following expression:

$$c_{ij} = \left[ (1 - \cos\theta) + \lambda^2 \left( \frac{x_j - x_i}{A_x} \right)^2 \right] \sqrt{A_i A_j}$$

where $c_{ij}$ indicates an element at an $i^{th}$ row and a $j^{th}$

column in the cost matrix; $\cos\theta$ indicates a normalized vector dot product of $p_i$ and $d_j$; $p_i$ indicates seismic waveform data, in the synthetic seismic data, recorded by the $i^{th}$ geophone; $d_j$ indicates seismic waveform data, in the observed seismic data, recorded by the $j^{th}$ geophone; $\lambda \geq 0$ indicates a weight of a spatial coordinate; $x_i$ indicates a coordinate of a spatial position of an $i^{th}$ geophone in the synthetic seismic data; $x_j$ indicates a coordinate of a spatial position of an $j^{th}$ geophone in the observed seismic data; $A_x$ indicates a normalization constant, is used to perform normalization on the coordinate of the spatial position; $A_i$ and $A_j$ indicate amplitude weights; $A_i$ is determined based on a seismic waveform, in the observed seismic data, recorded by the $i^{th}$ geophone; and $A_j$ is determined based on a seismic waveform, in the observed seismic data, recorded by the $j^{th}$ geophone.

In an embodiment, a weight of the spatial coordinate may be positively correlated with a maximum frequency at each inversion stage of a full-waveform inversion.

In an embodiment, if the expression is used in a full-waveform inversion of sound waves, then $A_i = A_j = 1$.

In an embodiment, the step of determining the matching matrix for reflecting the optimum matching relationship between the observed seismic data and the synthetic seismic data according to the cost matrix and calculating the objective function may further include:

> applying an auction algorithm to determine an optimal matching path in the cost matrix; and
> determining a sum of respective elements, in the matching matrix, located on the optimal matching path as the objective function.

In an embodiment, a process of determining the objective function may include:

> determining a matching matrix $M$ that minimizes a value of the objective function by the following expression:

$$\Gamma = \min_{M} \sum_{i,j} c_{ij} m_{ij}$$

> where $\Gamma$ indicates the objective function; $m_{ij}$ indicates an element at an $i^{th}$ row and a $j^{th}$ column in the matching matrix $M$; and $i, j$ indicates that elements in the matching matrix $M$ are traversed;
> representing the matching matrix $M$ equivalently as a permutation vector $\sigma$, so that no splitting occurs in a matching process, where $\sigma_i = j$ indicates that an $i^{th}$ element is mapped to a $j^{th}$ element, and $\sigma_i$ indicates an $i^{th}$ element in the permutation vector $\sigma$;
> applying the auction algorithm to perform solving to obtain an optimal permutation vector $\sigma^*$; and
> determining the objective function based on the op-

timal permutation vector $\sigma^*$ by the following expression:

$$\Gamma = \sum_{i} c_{i\sigma_i^*}$$

where $\sigma_i^*$ indicates an $i^{th}$ element in the optimal permutation vector $\sigma^*$, and $c_{i\sigma_i^*}$ indicates an element in an $i^{th}$ row and a $\sigma_i^*$ column.

In an embodiment, the adjoint source may be determined by the following expression:

$$s_i = \frac{1}{pd}\left(\frac{<p_i d_{\sigma_i^*}>}{p^2}p_i - d_{\sigma_i^*}\right)\sqrt{A_i A_{\sigma_i^*}}$$

where $s_i$ indicates the adjoint source; $<p_i d_{\sigma_i^*}>$ indicates an inner product of a vector $p_i$ and a vector $d_{\sigma_i^*}$; $p$ indicates a norm of a corresponding vector in synthetic seismic data; and $d$ indicates a norm of a corresponding vector in observed seismic data; $d_{\sigma_i^*}$ $\sigma_i^{*th}$ indicates a $\sigma_i^{*th}$ vector in a set of the observed seismic data; and $A\sigma_i^*$ is an amplitude function of the observed seismic data $d_{\sigma_i^*}$.

In an embodiment, the preset convergence criteria may include that an error between the observed seismic data and the synthetic seismic data is less than a preset threshold.

In an embodiment, when a quantity of geophones in the observed seismic data may be less than a quantity of geophones in the synthetic seismic data, zero-padding may be performed on the observed seismic data, so that the quantity of geophones in the observed seismic data is equal to the quantity of geophones in the synthetic seismic data.

According to a second aspect, an embodiment of the disclosure may provide a device for full-waveform inversion, which may include at least one processor and a memory. The memory may store computer executable instructions. The computer executable instructions stored in the memory, when executed by the at least one processor, may cause the at least one processor to implement the method for full-waveform inversion provided by the first aspect.

According to a third aspect, an embodiment of the disclosure may provide a computer readable storage medium which may stores computer executable instructions, which , when executed by a processor, may cause the processor to implement the method for full-waveform inversion provided by the first aspect.

## Brief Description of the Drawings

Accompanying drawings herein, which are incorporated into and constitute a part of the specification, illustrate exemplary embodiments of the disclosure, for explaining principles of the disclosure in conjunction with the specification.

Fig. 1 is a flowchart of a method for full-waveform inversion provided in an embodiment of the disclosure;

Fig. 2 schematically shows a transmission model provided in an embodiment of the disclosure;

Fig. 3 schematically shows an objective function error provided in an embodiment of the disclosure;

Fig. 4 schematically shows seismic data of a blind test provided in an embodiment of the disclosure;

Fig. 5 schematically shows an inversion result obtained by an existing method for full-waveform inversion;

Fig. 6 schematically shows an inversion result obtained by a method for full-waveform inversion provided in an embodiment of the disclosure; and

Fig. 7 schematically shows a structure of a device for full-waveform inversion provided in an embodiment of the disclosure.

Exemplary embodiments of the disclosure are illustrated in the accompanying drawings, provided for detailed description hereinafter. These accompanying drawings and detailed descriptions are not intended to limit the scope of the disclosure in any manner, but to explain its concept to those skilled in the art by reference to exemplary embodiments.

## Detailed Description of the Embodiments

The disclosure is further detailed below with reference to exemplary embodiments and the accompanying drawings. Similar reference numerals are assigned to similar elements across different embodiments. For clarity, detailed descriptions are provided for better understanding; however, those skilled in the art would readily appreciate that certain features may be omitted or substituted by other elements, materials, or methods depending on the circumstances. In some cases, certain operations are not illustrated or described in detail to avoid obscuring the essential aspects of the application. Those skilled in the art would readily understand these operations based on the descriptions in the specification and general technical knowledge.

Features, operations, or characteristics described herein can be combined in any suitable manner to form various embodiments. Moreover, orders of respective steps or actions in the process descriptions can be rearranged or adjusted in a manner that would be readily apparent to those skilled in the art. Therefore, specific orders in the description and accompanying drawings serve to clearly illustrate particular embodiments and do not imply that such an order is mandatory, unless explicitly stated otherwise.

Serial numbers for components herein, such as "first", "second", are used solely for distinguishing objects and do not imply order or technical significance. Terms such as "connected" or "coupled" herein refer to both direct and indirect connections (couplings) unless explicitly stated otherwise.

## Embodiment One

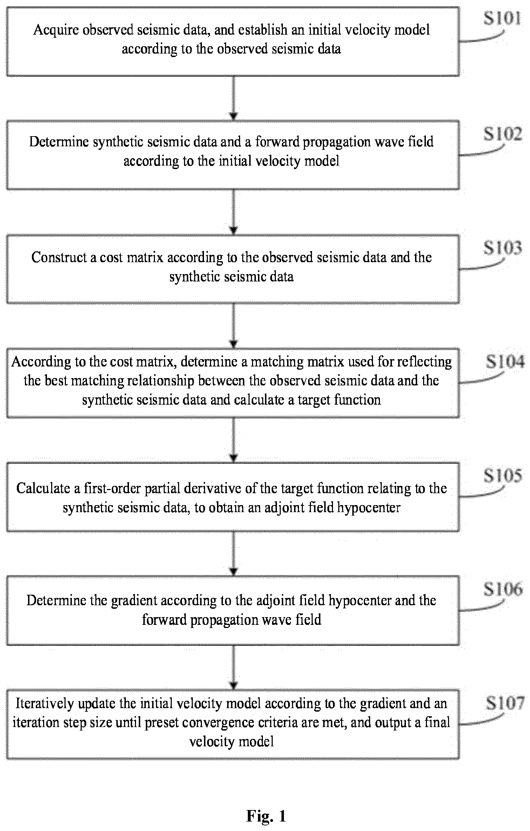

Fig. 1 is a flowchart of a method for full-waveform inversion provided in an embodiment of the disclosure. As shown in Fig. 1, the method for full-waveform inversion provided in the embodiment may include the following steps.

At step S101, observed seismic data is acquired, and an initial velocity model is established based on the observed seismic data.

In the embodiment, the observed seismic data refers to a set of acquired seismic data stored according to serial numbers of shots. Each shot may include many seismic traces, with each seismic trace corresponding to one receiver. In field seismic exploration, a quantity of the shots may reach tens of thousands, with each shot containing tens of thousands of seismic traces. The method for full-waveform inversion provided by the embodiment can be applied to data of each shot. The initial velocity model in the embodiment can be established by using any existing method, without restrictions imposed by this embodiment.

At step 102, synthetic seismic data and a forward propagation wave field are determined according to the initial velocity model.

Synthetic seismic data and a forward propagation wave field are calculated according to the initial velocity model. Each shot (also referred to as a common shot gather) is independently simulated. The initial velocity model represents a subsurface geological structure with a defined length and depth. A receiver (geophone) is a data recorder laid near the surface of the earth. For each shot, there is a corresponding forward propagation wave field and a set of synthetic seismic data. The forward propagation wave field represents the wave field across the entire space of the initial velocity model, while the set of synthetic seismic data refers to recordings of a wave field at a position of the receiver. Generally, in the seismic industry, synthetic seismic data for two-dimensional (2D) or three-dimensional (3D) models can be typically stored in a two-dimensional matrix, where each column corresponds to seismic trace signals from a geophone, and each row stores data according to the serial number of the receiver.

At step S103, a cost matrix is constructed based on the observed seismic data and the synthetic seismic data. The cost matrix here functions similarly to a similarity matrix, where each element represents a similarity between a piece of data of a seismic trace in the synthetic seismic data and a piece of data of a seismic trace in the observed seismic data.

In the embodiment, a cost matrix may be constructed for each shot gather. For a given shot number, there are corresponding observed and synthetic seismic data shot gathers. Each element in the cost matrix corresponds to a pair of seismic traces, including one trace from the synthetic seismic data and one trace from the observed seismic data.

At step S104, a matching matrix for reflecting an optimum matching relationship between the observed seismic data and the synthetic seismic data is determined according to the cost matrix, and an objective function is calculated.

In the embodiment, an optimized path may be identified in the cost matrix, ensuring a sum of matrix elements along this path is optimal. This optimized path reflects a matched set of seismic traces between the observed seismic data and the synthetic seismic data, which is then used to calculate an objective function.

At step S105, a first-order partial derivative of the objective function relating to the synthetic seismic data is calculated, to obtain an adjoint source.

At step S106, a gradient is determined based on the adjoint source and the forward propagation wave field.

In the embodiment, after obtaining the adjoint source, it may be propagated backwards. An adjoint field and the forward propagation wave field are multiplied, and their products are summed to compute the gradient. It should be noted that, the forward propagation wave field herein is generally obtained in two ways: 1) storing the entire forward propagation wave field on a hard disk during its calculation in step S102, and reading the forward propagation wave field from the hard disk in step S106; or 2) recording and storing only boundary values during calculation of the forward propagation wave field in step S102, eliminating the need for storing the entire forward propagation wave field on the hard disk, and reconstructing the entire seismic forward propagation wave field from the stored boundary values in step S106.

At step S107, the initial velocity model is updated based on the gradient and an iteration step. Step S102 to step S107 are performed repetitively, until the updated velocity model meets preset convergence criteria, at which point the velocity model is output as a final velocity model for the full-waveform inversion.

In the embodiment, the gradient from a previous step is used to iteratively updated the initial velocity model. Here, the iteration step may either be a fixed iteration step specified in advance, or an optimized iteration step that is gradually optimized based on a value of the objective function in an iteratively updating process.

After the initial velocity model is updated, a new model is obtained, i.e., the updated velocity model. The original initial velocity model is replaced by the updated velocity model. Then, step S102 to step S107 are performed repetitively, until the preset convergence criteria are met, to obtain a final velocity model. For example, the preset convergence criteria may be that an error between the observed seismic data and the synthetic seismic data is less than a preset threshold.

In the method for full-waveform inversion provided in the embodiment, observed seismic data is acquired, and an initial velocity model is established; synthetic seismic data and a forward propagation wave field are determined according to the initial velocity model; a cost matrix is constructed based on the observed seismic data and the synthetic seismic data, in the cost matrix, each element representing a similarity between a piece of data of a seismic trace in the synthetic seismic data and a piece of data of a seismic trace in the observed seismic data; a matching matrix for reflecting an optimum matching relationship between the observed seismic data and the synthetic seismic data is determined according to the cost matrix, and an objective function is calculated; a first-order partial derivative of the objective function relating to the synthetic seismic data is calculated, to obtain an adjoint source; a gradient is determined based on the adjoint source and the forward propagation wave field; and the initial velocity model is iteratively updated based on the gradient and an iteration step until the preset convergence criteria is met, and a final velocity model of the full-waveform inversion is obtained. By performing a matching on the seismic trace in the synthetic seismic data and the seismic trace in the observed seismic data while fully considering spatial characteristics of the seismic traces, requirements on the initial velocity are reduced, which can avoid trapping in the local minimum value and improve the inversion precision.

Embodiment Two

Based on the above embodiment, the embodiment further elaborates how to construct the cost matrix. In seismic exploration, the geophone is generally regarded as a point. When performing a matching on a set of synthetic seismic data and a set of actual observed seismic data, a position of the geophone may be regarded as an anchor point, and a seismic signal and positional information may be regarded as attribute vectors of the anchor point. $d_j$ may indicate seismic waveform data, in the observed seismic data, recorded by the $j^{th}$

geophone; and $p_i$ may indicate seismic waveform data, in the synthetic seismic data, recorded by the $i^{th}$ geophone. If the quantity of geophones contained in the observed seismic data is expressed as $n$, then $j \le n$; and if the quantity of geophones contained in the synthetic seismic data is expressed as $m$, then $i \le m$. In the circumstance of a two-dimensional flat ground surface, each geophone may be represented by a coordinate. First, a cost matrix is established, and each element in this matrix represents a similarity between two seismic traces.

In an implementation, an element in the cost matrix may be determined by the following expression:

$$ c_{ij} = \left[ (1 - \cos\theta) + \lambda^2 \left( \frac{x_j - x_i}{A_x} \right)^2 \right] \sqrt{A_i A_j} $$

where $c_{ij}$ indicates an element at an $i^{th}$ row and a $j^{th}$ column in the cost matrix; $\cos\theta$ indicates a normalized vector dot product of $p_i$ and $d_j$; $\theta$ indicates a vector angle between $p_i$ and $d_j$, $p_i$ indicating seismic waveform data, in the synthetic seismic data, recorded by the $i^{th}$ geophone, $d_j$ indicating seismic waveform data, in the observed seismic data, recorded by the $j^{th}$ geophone; $\lambda \ge 0$ indicates a weight of a spatial coordinate; $x_i$ indicates a coordinate of a spatial position of an $i^{th}$ geophone in the synthetic seismic data; $x_j$ indicates a coordinate of a spatial position of an $j^{th}$ geophone in the observed seismic data; $A_x$ indicates a normalization constant, is used to perform normalization on the coordinate of the spatial position, and may be a maximum numerical value of the coordinate of the spatial position. $A_i$ and $A_j$ indicate amplitude weights, $A_i$ being determined based on a seismic waveform, in the observed seismic data, recorded by the $i^{th}$ geophone, $A_j$ being determined based on a seismic waveform, in the observed seismic data, recorded by the $j^{th}$ geophone. In an embodiment, when the expression is used in a full-waveform inversion of sound waves, $A_i = A_j = 1$ may be chosen. In another embodiment, an amplitude function may be created by using the root-mean-square. Since the adjoint source becomes relatively complicated when the amplitude weight is created by using the waveform of the synthetic seismic data, in order to avoid such a problem, the waveform of the observed seismic data is used to create the amplitude weight in the embodiment.

In an implementation, a weight of the spatial coordinate is positively correlated with a maximum frequency at each inversion stage of a full-waveform inversion. The weight of the spatial coordinate determines an optimized permutation vector. The following two extreme circumstances are considered: in one extreme circumstance, a value of the weight of the spatial coordinate is $\lambda = 0$, and a variable of the coordinate of the spatial position has no influence at all, an optimized matching only depending on the similarity of waveforms; and in the other extreme circumstance, $\lambda = \infty$, the amplitude of the waveform may be ignored, and an optimized matching function is equivalent to a normalized least squares function or a zero-lag cross-correlation function. Selecting a relatively small weight $\lambda$ of the spatial coordinate results in a more convex objective function of the full-waveform inversion, which can appropriately solve the problem of trapping in the local minimum value; and a relatively large weight $\lambda$ of the spatial coordinate makes the objective function of the full-waveform inversion closer to the error function established based on the least squares, which is beneficial for improving the precision of the inversion result. Therefore, in the full-waveform inversion, the weight $\lambda$ of the spatial coordinate may be gradually increased during later stages of the inversion. That is, the weight $\lambda$ of the spatial coordinate may be increased with the increasing of the maximum frequency at each inversion stage, indicating a positive correlation between a weight of the spatial coordinate and the maximum frequency at various stages of the full-waveform inversion. In this way, trapping in the local minimum value can be avoided, while a detailed subsurface geological structure can be reconstructed.

In an embodiment, in determining the objective function for reflecting the error between the observed seismic data and the synthetic seismic data according to the cost matrix, an auction algorithm is applied to determine an optimal matching path in the cost matrix; a sum of respective elements, in the cost matrix, located on the optimal matching path is determined as the objective function.

In particularly, a process of determining the objective function is described hereafter.

First, a matching matrix $M$ that minimizes a value of the objective function is determined by the following expression:

$$ \Gamma = \min_M \sum_{i,j} c_{ij} m_{ij} $$

where $\Gamma$ indicates the objective function; $m_{ij}$ indicates an element at an $i^{th}$ row and a $j^{th}$ column in the matching matrix $M$; and $i,j$ indicates that elements in the matching matrix $M$ are traversed. $m_{ij}$ may only take the value 0 or 1, and meanwhile in order to ensure that each point does not split in the matching process, it is also necessary to make a limitation that there can only be one 1 in each row and in each column of the matching matrix $M$.

It may be regarded as a linear assignment problem. The matching matrix $M$ is equivalently represented as a permutation vector $\sigma$, so that no splitting occurs in a matching process. $\sigma_i = j$ indicates that an $i^{th}$ element is mapped to a $j^{th}$ element or indicates that an element $i$ is mapped to an element $j$, and $\sigma_i$ indicates an $i^{th}$ element in the permutation vector $\sigma$.

The auction algorithm is applied to perform solving to obtain an optimized permutation vector $\sigma^*$. By means of the auction algorithm, an optimal permutation vector $\sigma^*$ can be obtained quickly.

Then, the total matching cost, i.e., the objective function to be used in a full-waveform inversion, can be determined based on the optimal permutation vector $\sigma^*$ by using the following expression:

$$\Gamma = \sum_i c_{i\sigma_i^*}$$

where $\sigma_i^*$ indicates an $i^{th}$ element in the optimal permutation vector $\sigma^*$, and $c_{i\sigma_i^*}$ indicates an element in an $i^{th}$ row and a $\sigma_i^*$ column.

After the optimized permutation vector and a value of the objective function are obtained, solving is performed to obtain the adjoint source. The adjoint source $s_i$ is a first-order partial derivative of the objective function $\Gamma$ with regard to the synthetic seismic data $p_i$. In an embodiment, the adjoint source may be determined by the following expression:

$$s_i = \frac{1}{pd}\left(\frac{<p_i d_{\sigma_i^*}>}{p^2}p_i - d_{\sigma_i^*}\right)\sqrt{A_i A_{\sigma_i^*}}$$

where $s_i$ indicates the adjoint source; $<p_i d_{\sigma_i^*}>$ indicates an inner product of a vector $p_i$ and a vector $d_{\sigma_i^*}$; $p$ indicates a norm (a length under the L2 norm) of a corresponding vector in synthetic seismic data; and $d$ indicates a norm (a length under the L2 norm) of a corresponding vector in observed seismic data. $d_{\sigma_i^*}$ indicates the seismic waveform data in the observed seismic data which matches the seismic waveform data in the synthetic seismic data recorded by the $i^{th}$ geophone, i.e., a $\sigma_i^{*th}$ vector in a set of the observed seismic data, and $A\sigma_i^*$ is an amplitude function of the observed seismic data $d_{\sigma_i^*}$.

It should be noted that, the method for full-waveform inversion provided in the embodiment is applicable to non-uniformly distributed geophones, because the cost matrix incorporates spatial variables as well. Furthermore, the method is also suitable for three-dimensional data acquisition. For the circumstance of three-dimensional data, it is only needed to incorporate a spatial variable of another dimension when constructing the cost matrix. In particularly, all anchor points formed by the geophones can first be stored in a one-dimensional array, and during the construction of the cost matrix, two spatial variables along with amplitudes are incorporated. The cost matrix formed in this way remains a two-dimensional cost matrix, and subsequent processing steps can still use the same method.

## Embodiment Three

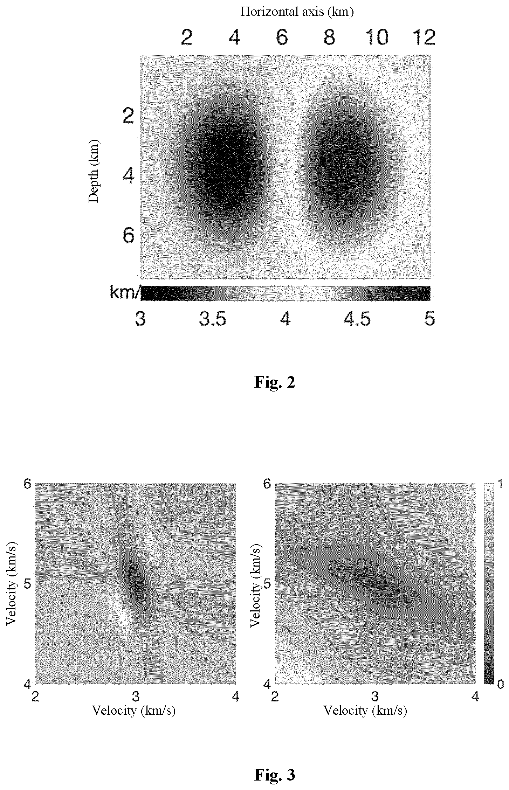

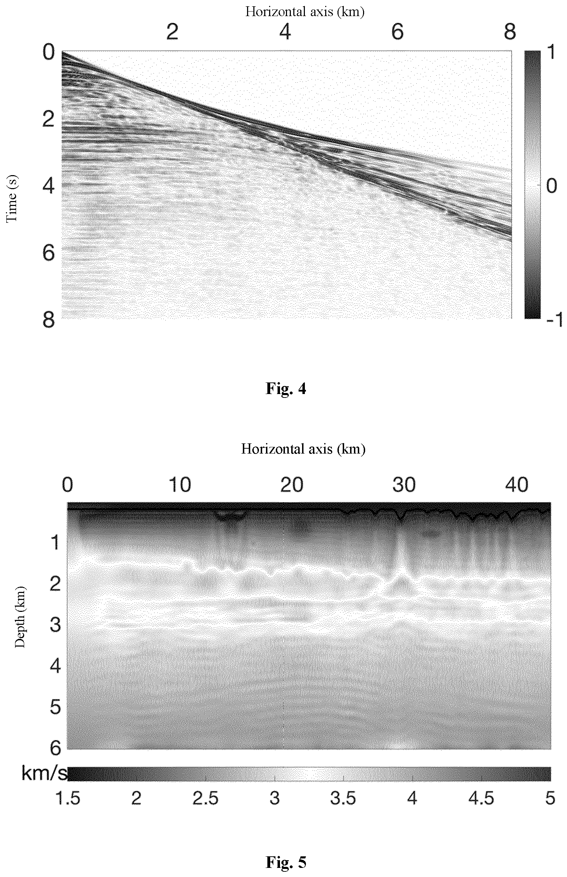

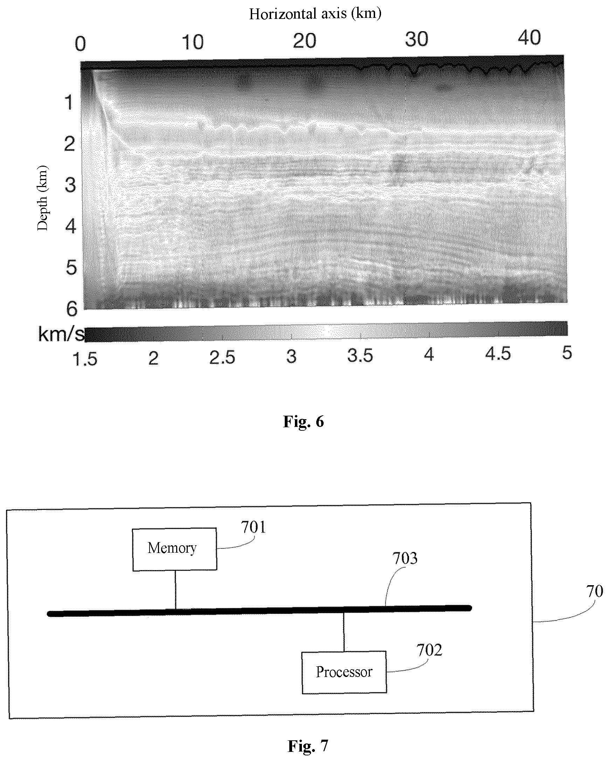

In the embodiment, specific testing data is used to illustrate the method for full-waveform inversion provided by the disclosure. Refer to Fig. 2, which schematically shows a transmission model provided herein. In the transmission model shown in Fig. 2, 400 receivers are located at a bottom boundary, and a single source is positioned in the middle of the top boundary. The source wavelet is a 5 Hz Ricker wavelet. Velocity anomalies on the left and right sides are both generated using a Gaussian function, with the left side representing a low-velocity anomaly and the right side a high-velocity anomaly. Minimum and maximum velocities are independent parameters, resulting in 51×51=2601 velocity models, each generating corresponding seismic records. Fig. 3 schematically illustrates a diagram of an objective function error based on the transmission model as shown in Fig. 2, as provided in an embodiment of the disclosure. A velocity model is chosen, and errors between all other seismic records and reference records are calculated. Fig. 3 shows, in a left diagram, a result obtained by using a traditional method, i.e., the least squares error function. It reveals a narrow feasible region, evidently indicating high precision requirements for the initial velocity model. In contrast, Fig. 3 shows, in a right diagram, a result obtained using an optimized matching objective function provided by the disclosure, which demonstrates good convexity. Fig. 4 schematically shows seismic data from a blind test in an embodiment of the disclosure. Here, a schematic diagram of blind-test seismic data from Chevron 2014 is shown, with data below 20 Hz. The low-frequency band contains significant noise, posing a substantial challenge for full-waveform inversion. Fig. 5 schematically shows an inversion result obtained by using an existing full-waveform inversion method. As shown in Fig. 5, when an existing method is used, the inversion model exhibits velocity anomalies, with the low-velocity stratum at depths ranging from 2 to 3 kilometers poorly defined due to inadequate matching of reflection waves of the seismic data. In contrast, Fig. 6 schematically shows an inversion result by a method for full-waveform inversion provided in an embodiment of the disclosure. As shown in Fig. 6, it demonstrates clear reflection stratum positions and reasonable velocity structures, confirming that the method can enhance the inversion effect.

## Embodiment Four

Under normal circumstances, the synthetic seismic data and the observed seismic data correspond one-to-one in both quantity and positions of geophones, ensuring the same size of the synthetic seismic data and the actual observed seismic data. Namely, the synthetic seismic data and the actual observed seismic data will have the same quantity of seismic traces and the same recording time. By utilizing the method for full-waveform inversion provided by the disclosure, an inversion result with a high precision can be obtained quickly and accurately, thereby achieving balanced matching.

However, in practical applications of full-waveform inversion, geophones are sometimes sparsely and irregularly distributed, resulting in less dense coverage. In other words, the observed seismic data in practical applications may be relatively sparse. A balanced matching algorithm in such cases may result in geophones being matched to relatively distant locations. To solve this problem, the embodiment proposes a redundancy matching algorithm. In order to solve the full-waveform inversion problem in a denser observation system, additional geophones can be incorporated into the synthetic seismic data. In this scenario, the synthetic seismic data is denser than the observed seismic data. Shot gathers of actual seismic data contain $n$ geophones, while $m$ receivers are used in the full-waveform inversion, with $m > n$, to ensure denser coverage. To match $n$ points with $m$ points, Additional geophones may be supplemented in the observed seismic data to obtain $m$ geophones, with seismic signals for the added geophones set to zero. Finally, redundancy matching is converted into balanced matching, allowing the balanced matching algorithm to be applied. This approach enables the full-waveform inversion problem to be effectively solved within a more densely covered observation system.

In summary, when the observed seismic data contains fewer geophones than the synthetic seismic data, zero-padding is performed on the observed seismic data to align their quantities.

Embodiment Five

From a mathematical perspective, the optimized matching algorithm provided by the disclosure allows two approaches for comparing matrices. In one approach, anchor points are chosen along the row direction, and the cost matrix is constructed with signals in the column direction. Alternatively, anchor points are selected along the column direction, and the cost matrix is constructed with signals in the row direction. Regardless of the chosen approach, the same auction algorithm is applied in the subsequent step of solving the matching matrix.

In the context of full-waveform inversion, anchor points are typically configured as spatial locations of receivers, with seismic signals recorded by these receivers used to construct the cost matrix. Under the circumstance of the full-waveform inversion, anchor points may also be configured along the time axis, with the cost matrix constructed using seismic signals along the spatial direction.

In a three-dimensional scenario, the optimized matching algorithm of the disclosure may operate in six possible modes, depending on how the cost matrix is constructed, as described hereafter. In a first mode, receivers are taken as anchor points, and the cost matrix is constructed with seismic signals from the receivers. In this case, anchor points are chosen from a plane spanning the horizontal and vertical axes, and the cost matrix is constructed with seismic signals in the direction of the time axis. In a second mode, anchor points are chosen from a plane spanning the horizontal and time axes, and the cost matrix is constructed with seismic signals in the direction of the vertical axis. In a third mode, anchor points are chosen from a plane spanning the vertical and time axes, and the cost matrix is constructed with seismic signals in the direction of the horizontal axis. In a fourth mode, anchor points are set in the direction of the time axis, and the cost matrix is calculated by means of the plane spanning the horizontal and vertical axes, where each element in the cost matrix represents a similarity of two two-dimensional matrices. In a fifth mode, anchor points are set in the direction of the horizontal axis, and the cost matrix is calculated by means of the plane spanning the vertical and time axes. In a sixth mode, anchor points are set in the direction of the vertical axis, and the cost matrix is calculated by means of the plane spanning the horizontal and time axes. After the cost matrix is constructed in any of these modes, the discussed auction algorithm may be applied as the optimized matching algorithm, and the resulting optimized matching is introduced into the corresponding mode to computer the adjoint source.

Embodiment Six

Generally, when anchor points are chosen in a certain direction, seismic signals for constructing the cost matrix are selected from a direction perpendicular to the direction along which the anchor points are chosen. For example, in a two-dimensional matrix, if anchor points are chosen along a spatial axis, the cost matrix is then constructed with seismic signals from the time axis.

In an embodiment, a direction for choosing the seismic signals is specified first, followed by choosing anchor points. For example, in a two-dimensional matrix, seismic signals may be extracted along a diagonal direction, with anchor points chosen in the direction of a perpendicular oblique diagonal. this concept can be extended to three-dimensional scenarios.

In a broader context, anchor points may also be chosen along a curve or a curved surface. In a two-dimensional space, any two families of conjugate curves on a plane can serve as a basis for choosing anchor points and extracting seismic signals. When there are many reflection waves, extracting seismic signals along an axis of reflection has greater physical significance. Similarly, in a three-dimensional circumstance, two families of conjugate curved surfaces can be used for choosing anchor points and extracting seismic signals.

## Embodiment Seven

The embodiment further provides a device for full-waveform inversion. Refer to Fig. 7, which is an example to illustrate the embodiment, without limiting the disclosure. Fig. 7 schematically shows a structure of a full-waveform inversion device 70 provided by an embodiment of the disclosure. As shown, the device 70 includes a memory 701, a processor 702, and a bus 703. The bus 703 is configured to realize connections among various components.

The memory 701 stores a computer program thereon that, when executed by the processor 702, implements the solution described in any of the above method embodiments.

The memory 701 and the processor 702 are connected directly or indirectly for data transmission or interaction. For example, these components may be connected with each other through one or more communication buses or signal lines, such as via the bus 703. The memory 701 stores a computer program thereon for performing the method for full waveform inversion, and includes at least one software function module in the form of software or firmware. By executing the software program and modules stored in the memory 701, the processor 702 carries out various functional applications and data processing tasks required for the method.

The memory 701 may include, but is not limited to, a random access memory (RAM), a read-only memory (ROM), a programmable read-only memory (PROM), an erasable programmable read-only memory (EPROM), an electrically erasable programmable read-only memory (EEPROM) and the like. The memory 701 is configured for storing a program, which is executed by the processor 702 upon receiving an execution instruction. In an embodiment, the software program and modules stored in the memory 701 may also include an operating system, which may include various software components and/or drivers for managing system tasks such as memory management, storage device control, power management, and may communicate with various hardware or software components, thereby providing a running environment for other software components.

The processor 702 may be an integrated circuit chip with signal processing capability. The processor 702 may be a general-purpose processor, including but not limited to a central processing unit (CPU), or a network processor (NP) and the like. The processor 702 is capable of implementing or executing various methods, steps, and logic block diagrams disclosed in embodiments of the disclosure. A general-purpose processor may include a microprocessor or any conventional processor. It can be understood that, the structure shown in Figure 7 is for the illustrative purpose only, and more or fewer components than those shown in Fig. 7 may be included, or a configuration different from that shown in Fig. 7 is possible. Various components shown in Fig. 7 may be implemented by using hardware and/or software.

The embodiment further provides a computer readable storage medium, on which a computer program is stored, and the computer program, when executed by the processor, implements the technical solution of any of the method embodiments.

By utilizing the method for full-waveform inversion, the device for full-waveform inversion, and the storage device thereof provided by embodiments of the disclosure, observed seismic data is acquired, and an initial velocity model is established based on the observed seismic data; synthetic seismic data and a forward propagation wave field are determined according to the initial velocity model; a cost matrix is constructed based on the observed seismic data and the synthetic seismic data, each element in the cost matrix representing a similarity between a piece of data of a seismic trace in the synthetic seismic data and a piece of data of a seismic trace in the observed seismic data; a matching matrix for reflecting an optimum matching relationship between the observed seismic data and the synthetic seismic data is determined based on the cost matrix, and an objective function is calculated; a first-order partial derivative of the objective function relating to the synthetic seismic data is calculated, to obtain an adjoint source; a gradient is determined based on the adjoint source and the forward propagation wave field; and the initial velocity model is iteratively updated based on the gradient and an iteration step until the preset convergence criteria are met, and a final velocity model of the full-waveform inversion is obtained. The disclosed method for full-waveform inversion facilitates comparison of different sets of traces, by performing matching on the seismic traces between the synthetic seismic data and the observed seismic data while fully considering spatial characteristics of the seismic traces. It reduced the precision requirements for the initial velocity, avoiding trapping in the local minimum value and improving inversion precision. The optimized matching objective function provided by the disclosure can effectively alleviate the stringent requirements on the precision of the initial velocity model in existing technologies, achieving a high-precision and high-fidelity subsurface velocity structure, with clear reflection stratum positions and reasonable velocity distributions, thereby enhancing the inversion effect.

In this disclosure, embodiments are described in a progressive manner. For identical or similar parts among the embodiments, reference can be made to descriptions in other embodiments, with each embodiment focusing on its distinctions from others.

The scope of the disclosure is not limited to the described embodiments. It is evident that those skilled in the art can make various modifications and variations to the disclosure without departing from its scope and spirit. Such modifications and variations that fall within the scope defined by the appended claims and their equivalents are also intended to be encompassed by the disclosure.

## Claims

1. A method for full-waveform inversion, comprising steps of:

    i) acquiring observed seismic data, and establishing an initial velocity model based on the observed seismic data;
    ii) determining synthetic seismic data and a forward propagation wave field according to the initial velocity model;
    iii) constructing a cost matrix based on the observed seismic data and the synthetic seismic data, where each of elements in the cost matrix represents a similarity between a piece of data of a seismic trace in the synthetic seismic data and a piece of data of a seismic trace in the observed seismic data;
    iv) determining a matching matrix for reflecting an optimum matching relationship between the observed seismic data and the synthetic seismic data according to the cost matrix, and calculating an objective function;
    v) calculating a first-order partial derivative of the objective function relating to the synthetic seismic data, to obtain an adjoint source;
    vi) determining a gradient based on the adjoint source and the forward propagation wave field;
    vii) updating the initial velocity model based on the gradient and an iteration step; and
    viii) repeating steps ii) to vii) until preset convergence criteria are met, and the updated velocity model is output as a final velocity model of the full-waveform inversion.

2. The method according to claim 1, wherein an element in the cost matrix is determined by the following expression:

$$c_{ij} = [(1 - \cos\theta) + \lambda^2 \left(\frac{x_j - x_i}{A_x}\right)^2]\sqrt{A_i A_j}$$

    where $c_{ij}$ indicates an element at an $i^{th}$ row and a $j^{th}$ column in the cost matrix; $\cos\theta$ indicates a normalized vector dot product of $p_i$ and $d_j$; $p_i$ indicates seismic waveform data, in the synthetic seismic data, recorded by the $i^{th}$ geophone; $d_j$ indicates seismic waveform data, in the observed seismic data, recorded by the $j^{th}$ geophone; $\lambda \geq 0$ indicates a weight of a spatial coordinate; $x_i$ indicates a coordinate of a spatial position of an $i^{th}$ geophone in the synthetic seismic data; $x_j$ indicates a coordinate of a spatial position of an $j^{th}$ geophone in the observed seismic data; $A_x$ indicates a normalization constant, is used to perform normalization on the coordinate of the spatial position; $A_i$ and $A_j$ indicate amplitude weights; $A_i$ is determined based on a seismic waveform, in the observed seismic data, recorded by the $i^{th}$ geophone; and $A_j$ is determined based on a seismic waveform, in the observed seismic data, recorded by the $j^{th}$ geophone.

3. The method according to claim 2, wherein a weight of the spatial coordinate is positively correlated with a maximum frequency at each inversion stage of a full-waveform inversion.

4. The method according to claim 2, wherein if the expression is used in a full-waveform inversion of sound waves, then $A_i = A_j = 1$.

5. The method according to claim 2, wherein determining the matching matrix for reflecting the optimum matching relationship between the observed seismic data and the synthetic seismic data based on the cost matrix and calculating the objective function further comprises:

    applying an auction algorithm to determine an optimal matching path in the cost matrix; and determining a sum of respective elements, in the cost matrix, located on the optimal matching path as the objective function.

6. The method according to claim 5, wherein a process of determining the objective function comprises:

    determining a matching matrix $M$ that minimizes a value of the objective function by the following expression:

$$\Gamma = \min_{M} \sum_{i,j} c_{ij} m_{ij}$$

    where $\Gamma$ indicates the objective function; $m_{ij}$ indicates an element at an $i^{th}$ row and a $j^{th}$ column in the matching matrix $M$; and $i,j$ indicates that elements in the matching matrix $M$ are traversed;
    representing the matching matrix $M$ equivalently as a permutation vector $\sigma$, so that no splitting occurs in a matching process, where $\sigma_i = j$ indicates that an $i^{th}$ element is mapped to a $j^{th}$ element, and $\sigma_i$ indicates an $i^{th}$ element in the permutation vector $\sigma$;
    applying the auction algorithm to perform solving to obtain an optimal permutation vector $\sigma^*$; and
    determining the objective function based on the optimal permutation vector $\sigma^*$ by the following expression:

$$\Gamma = \sum_i c_{i\sigma_i^*}$$

where $\sigma_i^*$ indicates an $i^{th}$ element in the optimal permutation vector $\sigma^*$, and $c_{i\sigma_i^*}$ indicates an element in an $i^{th}$ row and a $\sigma_i^*$ column.

7. The method according to claim 6, wherein the adjoint source is determined by the following expression:

$$s_i = \frac{1}{pd}\left(\frac{<p_i d_{\sigma_i^*}>}{p^2}p_i - d_{\sigma_i^*}\right)\sqrt{A_i A_{\sigma_i^*}}$$

where $s_i$ indicates the adjoint source; $<p_i d_{\sigma_i^*}>$ indicates an inner product of a vector $p_i$ and a vector $d_{\sigma_i^*}$; $p$ indicates a norm of a corresponding vector in synthetic seismic data; and $d$ indicates a norm of a corresponding vector in observed seismic data; $d_{\sigma_i^*}$ indicates a $\sigma_i^{*th}$ vector in a set of the observed seismic data; and $A_{\sigma_i^*}$ is an amplitude function of the observed seismic data $d_{\sigma_i^*}$.

8. The method according to any one of claims 1 to 7, wherein when a quantity of geophones in the observed seismic data is less than a quantity of geophones in the synthetic seismic data, zero-padding is performed on the observed seismic data, so that the quantity of geophones in the observed seismic data is equal to the quantity of geophones in the synthetic seismic data.

9. The method according to any one of claims 1 to 7, wherein data of the seismic trace is extracted in the following three manners:

   extracting along a time axis;
   extracting along a spatial axis; and
   extracting along one of conjugate curves.

10. A device for full-waveform inversion, comprising at least one processor and a memory storing computer executable instructions, wherein the computer executable instructions stored in the memory, when executed by the at least one processor, cause the at least one processor to perform the full-waveform inversion method according to any one of claims 1 to 9.

11. A computer readable storage medium storing computer executable instructions thereon, wherein the computer executable instructions, when executed by a processor, cause the processor to perform the full-waveform inversion method according to any one of claims 1 to 9.

Acquire observed seismic data, and establish an initial velocity model according to the observed seismic data — S101

Determine synthetic seismic data and a forward propagation wave field according to the initial velocity model — S102

Construct a cost matrix according to the observed seismic data and the synthetic seismic data — S103

According to the cost matrix, determine a matching matrix used for reflecting the best matching relationship between the observed seismic data and the synthetic seismic data and calculate a target function — S104

Calculate a first-order partial derivative of the target function relating to the synthetic seismic data, to obtain an adjoint field hypocenter — S105

Determine the gradient according to the adjoint field hypocenter and the forward propagation wave field — S106

Iteratively update the initial velocity model according to the gradient and an iteration step size until preset convergence criteria are met, and output a final velocity model — S107

**Fig. 1**

Fig. 2

Fig. 3

Horizontal axis (km)

**Fig. 4**

Horizontal axis (km)

**Fig. 5**

Horizontal axis (km)

**Fig. 6**

**Fig. 7**

## INTERNATIONAL SEARCH REPORT

| International application No. |
|---|
| **PCT/CN2023/117802** |

### A. CLASSIFICATION OF SUBJECT MATTER

G01V1/28(2006.01)i; G01V1/30(2006.01)n

According to International Patent Classification (IPC) or to both national classification and IPC

### B. FIELDS SEARCHED

Minimum documentation searched (classification system followed by classification symbols)

IPC:G01V1

Documentation searched other than minimum documentation to the extent that such documents are included in the fields searched

Electronic data base consulted during the international search (name of data base and, where practicable, search terms used)

CNABS, CNTXT, CNKI: 伴随, 波形, 测, 测量, 代价, 地震, 点积, 迭代, 反演, 仿真, 观测, 函数, 合成, 计算, 加权, 检测, 接近, 近似, 矩阵, 路径, 模拟, 匹配, 权值, 权重, 全波形, 实际, 速度, 算出, 梯度, 相近, 相近度, 相似, 相似度, 相似性, 元素, 正传, 最佳, 最优 DWPI, EPTXT, WOTXT, USTXT, VEN: cost, earthquake, FWI, inversion, likeness, match, matrix, observe, optimal, similar, speed, synthesis, velocity, full waveform

### C. DOCUMENTS CONSIDERED TO BE RELEVANT

| Category* | Citation of document, with indication, where appropriate, of the relevant passages | Relevant to claim No. |
|---|---|---|
| A | CN 114966837 A (CHINA UNIVERSITY OF PETROLEUM, BEIJING) 30 August 2022 (2022-08-30) description, paragraphs 96-296 | 1-11 |
| A | CN 113970789 A (CHINA PETROLEUM & CHEMICAL CORP. et al.) 25 January 2022 (2022-01-25) entire document | 1-11 |
| A | CN 103472482 A (CHINA NATIONAL PETROLEUM CORP. et al.) 25 December 2013 (2013-12-25) entire document | 1-11 |
| A | CN 111045077 A (BEIJING RESEARCH INSTITUTE OF URANIUM GEOLOGY) 21 April 2020 (2020-04-21) entire document | 1-11 |
| A | US 2018164453 A1 (SUB SALT SOLUTIONS LTD) 14 June 2018 (2018-06-14) entire document | 1-11 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 November 2023** | **23 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 585 974 A1**

## INTERNATIONAL SEARCH REPORT

| International application No. |
| --- |
| **PCT/CN2023/117802** |

**C. DOCUMENTS CONSIDERED TO BE RELEVANT**

| Category* | Citation of document, with indication, where appropriate, of the relevant passages | Relevant to claim No. |
| --- | --- | --- |
| A | US 2017115418 A1 (CGG SERVICES SAS) 27 April 2017 (2017-04-27)<br>entire document | 1-11 |
| A | WO 2016193180 A1 (SUB SALT SOLUTIONS LTD) 08 December 2016 (2016-12-08)<br>entire document | 1-11 |

Form PCT/ISA/210 (second sheet) (July 2022)

**INTERNATIONAL SEARCH REPORT**
Information on patent family members

International application No.

**PCT/CN2023/117802**

| Patent document cited in search report | | | Publication date (day/month/year) | Patent family member(s) | | | Publication date (day/month/year) |
|---|---|---|---|---|---|---|---|
| CN | 114966837 | A | 30 August 2022 | None | | | |
| CN | 113970789 | A | 25 January 2022 | None | | | |
| CN | 103472482 | A | 25 December 2013 | CN | 103472482 | B | 06 July 2016 |
| CN | 111045077 | A | 21 April 2020 | CN | 111045077 | B | 18 March 2022 |
| US | 2018164453 | A1 | 14 June 2018 | EP | 3304135 | A1 | 11 April 2018 |
| | | | | CA | 2987521 | A1 | 08 December 2016 |
| | | | | WO | 2016193179 | A1 | 08 December 2016 |
| | | | | GB | 201509337 | D0 | 15 July 2015 |
| | | | | GB | 2538807 | A | 30 November 2016 |
| | | | | GB | 2538807 | B | 15 May 2019 |
| | | | | BR | 112017025640 | A2 | 11 September 2018 |
| | | | | AU | 2016269672 | A1 | 25 January 2018 |
| US | 2017115418 | A1 | 27 April 2017 | WO | 2016001750 | A2 | 07 January 2016 |
| | | | | US | 10725190 | B2 | 28 July 2020 |
| WO | 2016193180 | A1 | 08 December 2016 | GB | 201509332 | D0 | 15 July 2015 |
| | | | | GB | 2538804 | A | 30 November 2016 |

Form PCT/ISA/210 (patent family annex) (July 2022)

**EP 4 585 974 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211105068